# EUROPÄISCHE PATENTSCHRIFT

(11) **EP 3 700 798 B1**
(45) Veröffentlichungstag und Bekanntmachung des Hinweises auf die Patenterteilung: **17.04.2024**
(21) Anmeldenummer: 19749273.9
(22) Anmeldetag: 24.07.2019
(51) Int. Cl.: B62B 3/14

(54) **OBJEKTHALTERUNG FÜR EINE SCHIEBEGRIFFEINHEIT**
OBJECT HOLDER FOR A HANDLE
PORTE-OBJET POUR UNE POIGNEE

(30) Priorität: 05.09.2018 DE 102018121639
(43) Veröffentlichungstag der Anmeldung: 02.09.2020
(73) Patentinhaber: Wanzl GmbH & Co. KGaA, 89340 Leipheim (DE)
(72) Erfinder: GASCHE, Thomas, 89340 Leipheim (DE)
(86) Internationale Anmeldenummer: PCT/EP2019/069921
(87) Internationale Veröffentlichungsnummer: WO 2020/048678

(56) Entgegenhaltungen:
- WO-A1-96/41660
- WO-A1-99/51131
- WO-A1-2017/019195
- DE-U1-202009 014 266
- US-A- 5 857 601
- US-A1- 2010 294 816

## Beschreibung

Die vorliegende Erfindung betrifft eine Objekthalterung für eine Schiebegriffeinheit eines Transportwagens, eine Schiebegriffeinheit sowie einen Transportwagen.

Aus dem Stand der Technik sind bereits Objekthalterungen für Schiebegriffeinheiten für Transportwagen bekannt. Diese betreffen beispielsweise eine Halterung für eine Lupe, eine Halterung für Becher oder Scaneinrichtungen in einem Einzelwarenhandel. Transportwagen für schwere und sperrige Güter, wie sie beispielsweise in einem Bau- oder Großmarkt zu finden sind, werden häufig mit aufragenden Griffen versehen. Diese erlauben es, eine natürlichere bzw. ergonomische Handhaltung beim Bewegen des schwerbeladenen Transportwagens einzunehmen.

Derartige aufragende Griffe finden aber für eine ergonomische Handhaltung auch bereits bei Transportwagen in Einzelhandelsgeschäften Anwendung, die üblicherweise an den Enden einer sich horizontal erstreckenden Querstange angeordnet sind.

Aus der WO 2012/042033 A1 ist bereits ein Schiebegriff für einen Transportwagen bekannt, der neben einer quer bzw. horizontal verlaufenden Querstange auch aufragende Griffteile zu beiden Enden des Schiebegriffs aufweist, wobei diese Griffteile drehbar um eine Bewegungsachse gelagert sind und auch in einer Position fixiert werden können.

Aus der EP 0 985 200 B1 ist bereits ein Handgriff mit einem Mittelstück und mit zwei an den Enden des Mittelstücks befestigbaren Endstücken bekannt, wobei die Endstücke eine Einrichtung zur Befestigung an einem Transportwagen, wie einem Einkaufswagen, aufweisen.

Aus der WO 2017/019195 A1 ist eine Objekthalterung für einen Kinderwagen bekannt.

Es ist die Aufgabe der vorliegenden Erfindung, eine Objekthalterung für eine Schiebegriffeinheit, eine Schiebegriffeinheit sowie einen Transportwagen der eingangs genannten Art in vorteilhafter Weise weiterzubilden, insbesondere dahingehend, dass die Objekthalterung universeller einsetzbar und besser an den Einsatzzweck anpassbar ist.

Diese Aufgabe wird erfindungsgemäß gelöst durch eine Objekthalterung für eine Schiebegriffeinheit eines Transportwagens mit den Merkmalen des Anspruchs 1. Danach ist vorgesehen, dass eine Objekthalterung für eine Schiebegriffeinheit eines Transportwagens bereitgestellt wird, wobei die Objekthalterung mehrteilig ausgebildet ist, wobei die Objekthalterung wenigstens ein Halteelement und wenigstens ein Einsatzelement aufweist, wobei das Einsatzelement im montierten Zustand in das Halteelement eingesetzt und dort gehalten ist. Bevorzugte Weiterbildungen der Erfindung sind in den abhängigen Ansprüchen definiert.

Die Erfindung basiert auf dem Grundgedanken, dass durch die Mehrteiligkeit der Objekthalterung eine bessere Anpassbarkeit an Einsatzzwecke ermöglicht wird. Dies wird insbesondere dadurch erreicht, indem für dieselbe Objekthalterung mehrere Einsatzelemente vorgesehen sein können. Außerdem wird die Austauschbarkeit des Einsatzelements erhöht, wodurch es auch möglich wird, beispielsweise für die Objekthalterung und das Halteelement einen vergleichsweise robusten Werkstoff zu nehmen, wohingegen das Einsatzelement möglicherweise aus einem anderen Werkstoff gefertigt ist, so dass hier zwar eine bessere Anpassbarkeit an den Einsatzzweck ermöglicht, aber jedoch auch in Kauf genommen werden kann, dass hier nach einer gewissen Standzeit ein Ersatz erfolgt.

Darüber hinaus kann vorgesehen sein, dass das Halteelement im Wesentlichen ringförmig ausgebildet ist. Durch die ringförmige Form lassen sich wichtige Einsatzzwecke optimal abbilden, beispielsweise im Zusammenhang mit einer Becherhalterung, einer Mobiltelefonhalterung oder einer Scannerhalterung. Diese Einsatzzwecke können sehr gut mit einer Objekthalterung, die eine ringförmige Grundform hat, bedient werden.

Darüber hinaus kann vorgesehen sein, dass das Einsatzelement wenigstens eine im Wesentlichen ringförmige Außenkontur aufweist, die an eine Innenkontur des Haltelements angepasst ist. Durch die ringförmige Außenkontur wird es einfach möglich, eine ringförmige Grundform bereitzustellen, in die dann eine entsprechende Anpassung an die Innenkontur des Halteelements erfolgen kann. So kann insgesamt eine sehr stabile und gleichzeitig einfach zu erstellende Geometrie für die Objekthalterung bereitgestellt werden.

Erfindungsgemäß ist vorgesehen, dass das Einsatzelement wenigstens ein Verrastungselement und/oder ein Klemmelement aufweist, mittels dessen das Einsatzelement im Halteelement verrastbar ist und/oder klemmbar im Haltelement gefestigt werden kann. Dadurch wird eine einfache und sichere Verbindung von Einsatzelement und Halteelement ermöglicht.

Insbesondere ist vorgesehen, dass das Verrastungselement und/oder das Klemmelement einteilig an das Einsatzelement angeformt ist. Hierdurch wird eine einfache und kostengünstige Herstellung ermöglicht.

Außerdem ist denkbar, dass das Verrastungselement und/oder das Klemmelement ein Federelement mit wenigstens einer Rastnase ist und/oder umfasst. Hierdurch wird eine einfache und zuverlässige Verrastung und Halterung ermöglicht.

Außerdem kann vorgesehen sein, dass das Haltelement in einer Innenkontur, die für den Einsatz des Einsatzelements vorgesehen ist, wenigstens eine Haltenut, insbesondere eine umlaufende Haltenut, aufweist.

Mit der Haltenut, insbesondere der umlaufenden Haltenut, kann das Halteelement ein entsprechendes Gegenstück für beispielsweise das Federelement oder die Rastnase, oder ein sonstiges Verrastungselement oder Klemmelement bereitstellen.

Das Haltelement und/oder das Einsatzelement können aus Kunststoff ausgebildet sein. Hierdurch wird eine einfache und kostengünstige Ausbildung ermöglicht. Insbesondere kann ein schlagzäher Kunststoff verwendet werden. Aber auch die Möglichkeit, unterschiedliche Kunststoffe einzusetzen ist denkbar.

Insbesondere ist denkbar, dass das Haltelement und/oder das Einsatzelement als Kunststoffspritzgussteile ausgebildet sind. Hierdurch wird eine einfache und gleichzeitig kostengünstige Herstellung ermöglicht.

Das Haltelement und/oder das Einsatzelement können zumindest teilweise aus dem identischen Kunststoff ausgebildet sein.

Insbesondere können das Haltelement und/oder das Einsatzelement zumindest teilweise aus einem weiteren Kunststoff ausgebildet sein.

Denkbar ist aber auch, dass beispielsweise eine Herstellung im 2K-Spritzguss (= Zweikomponenten-Spritzguss) oder die Herstellung aus unterschiedlichen Kunststoffen ermöglicht ist. So können Haltelement und/oder das Einsatzelement aus mehreren Werkstoffen, insbesondere zwei Kunststoffen bestehen.

Das Einsatzelement kann beispielsweise als ringförmiger Becherhalter ausgebildet sein. Hierdurch wird es möglich, am Transportwagen einen Becherhalter vorzusehen und somit beispielsweise das Einkaufserlebnis für den Nutzer aufzuwerten.

Außerdem ist denkbar, dass das Einsatzelement wenigstens ein Bodenstegelement aufweist, so dass das Einsatzelement eingerichtet und beschaffen ist, als Mobiltelefonhalterung zu dienen. Denkbar ist aber auch, dass bei einem derartigen Bodenstegelement andere Gegenstände entsprechend eingestellt werden können, beispielsweise kleine Tablet-PCs, Displays, Scanner oder dergleichen.

Die Ausführung als Becherhalter kann auch dazu benutzt werden, hier einen Scanner für Waren oder dergleichen einzuhängen.

Außerdem ist denkbar, dass das Einsatzelement eine Lupe aufweist. Hierdurch wird es beispielsweise möglich, es Kunden zu erleichtern, den Einkaufszettel oder sonstige Notizen besser lesen zu können.

Es kann vorgesehen sein, dass die wenigstens eine Objekthalterung, wie vorstehend beschrieben, auch mehrere Einsatzelemente mit unterschiedlichen Innenradien und/oder Innenkonturen aufweist.

Insbesondere kann vorgesehen sein, dass zumindest ein Einsatzelement mit den Merkmalen für eine Mobiltelefonhalterung oder einer Lupe versehen ist.

Gemäß Anspruch 14 betrifft die vorliegende Erfindung eine Schiebegriffeinheit für einen Transportwagen.

Gemäß Anspruch 15 betrifft die vorliegende Erfindung einen Transportwagen mit wenigstens einer Objekthalterung und einer Schiebegriffeinheit.

Weitere Einzelheiten und Vorteile der Erfindung sollen nun anhand eines in der Zeichnung näher dargestellten Ausführungsbeispiels erläutert werden.

Es zeigen:
- Fig. 1: in perspektivischer Ansicht ein Ausführungsbeispiel eines erfindungsgemäßen Transportwagens mit einem Ausgangsbeispiel einer erfindungsgemäßen Schiebegriffeinheit sowie erfindungsgemäßen Ausführungsbeispielen von Objekthalterungen;
- Fig. 2: eine Draufsicht auf eine Objekthalterung als sog. linke Objekthalterung;
- Fig. 3: eine weitere Ansicht der Objekthalterung gemäß Fig. 2;
- Fig. 4: eine Ansicht von unten auf die Objekthalterung gemäß Fig. 2;
- Fig. 5: die Objekthalterung gemäß Fig. 2 mit einem ersten Einsatzelement;
- Fig. 6: die Objekthalterung gemäß Fig. 2 mit einem zweiten Einsatzelement;
- Fig. 7: die Objekthalterung gemäß Fig. 2 mit einem dritten Einsatzelement;
- Fig. 8: eine weitere Ausführungsform einer Objekthalterung als rechte Ausführungsform mit dem Einsatzelement gemäß Fig. 5;
- Fig. 9: die Objekthalterung gemäß Fig. 8 mit dem Einsatzelement gemäß Fig. 6; und
- Fig. 10: die Objekthalterung gemäß Fig. 8 mit dem Einsatzelement gemäß Fig. 7.

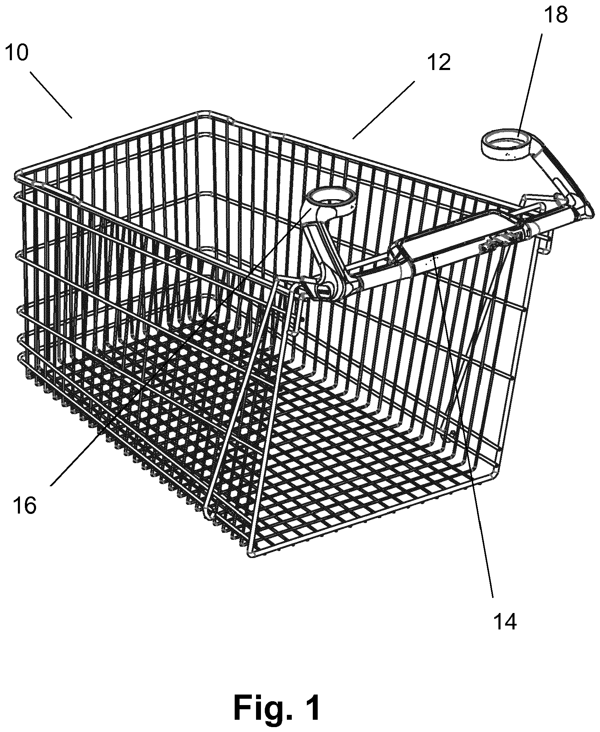

**Fig. 1** zeigt in perspektivischer Ansicht ein Ausführungsbeispiel eines Transportwagens 10 mit einem Korb 12. Der Transportwagen 10 ist dabei ohne das Fahrgestell dargestellt. Darüber hinaus ist eine Schiebegriffeinheit 14 vorgesehen. An der Schiebegriffeinheit 14 ist eckseitig endseitig jeweils eine Objekthalterung 16, 18 vorgesehen. Dabei ist die Objekthalterung 16 eine sog. linke Objekthalterung und die Objekthalterung 18 eine sog. rechte Objekthalterung.

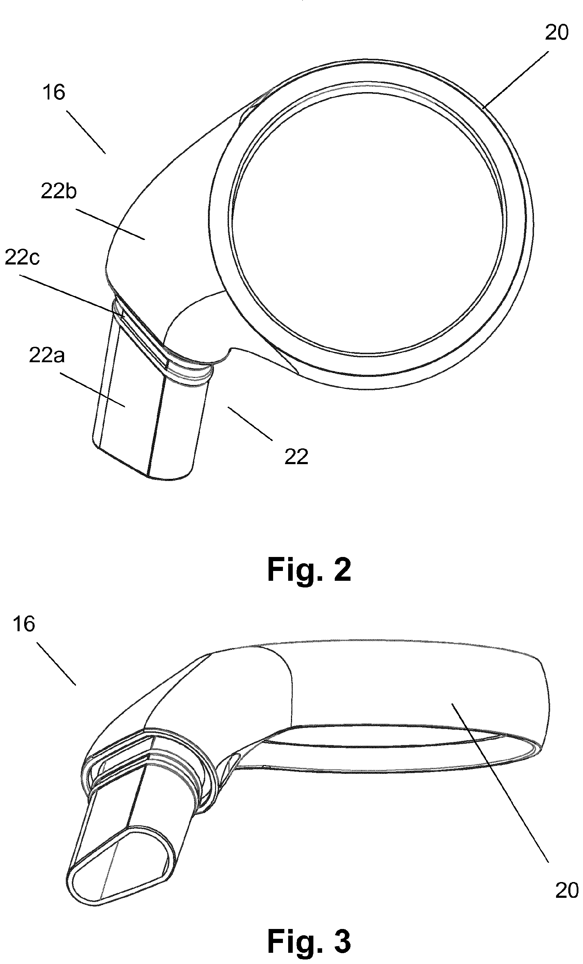

Wie dies weiter in **Fig. 2** gezeigt ist, die die linke Objekthalterung 16 näher zeigt, weist die Objekthalterung 16 ein Halteelement 20 auf. Des Weiteren weist die Objekthalterung 16 einen Befestigungsarm 22 auf. Der Befestigungsarm 22 weist dabei einen Befestigungsabschnitt 22a, einen Verbindungsabschnitt 22b und eine Rastnut 22c auf. Mittels des Befestigungsabschnitts 22a kann die Objekthalterung 16 in die Schiebegriffeinheit 14 in den aufragenden Haltegriff eingesteckt und dort mittels einer Rastnut 22c verrastet werden.

**Fig. 3** zeigt nochmals in anderer Ansicht die Objekthalterung 16 mit dem Halteelement 20, wie in Fig. 2 gezeigt.

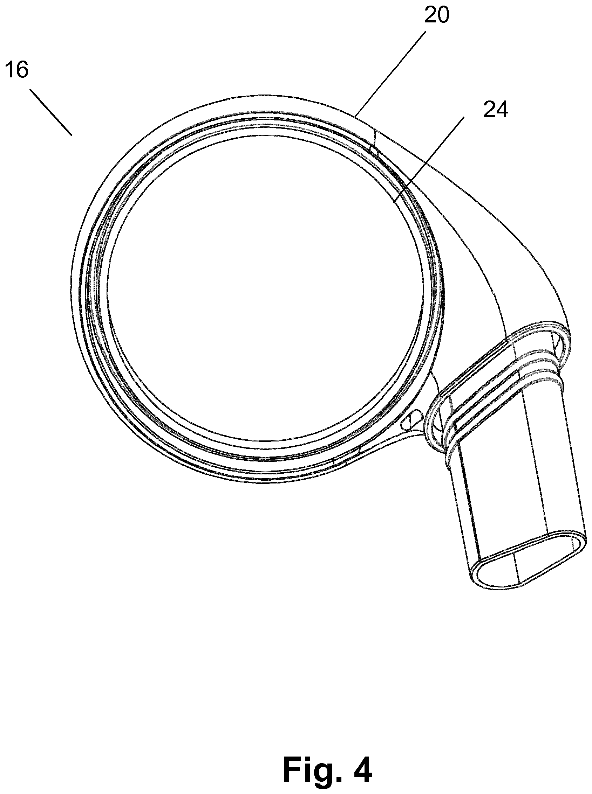

Auch **Fig. 4** zeigt die Objekthalterung 16 von unten. Wie dies weiter in Fig. 4 gezeigt ist, weist die Objekthalterung 16 eine umlaufende Haltenut 24 auf.

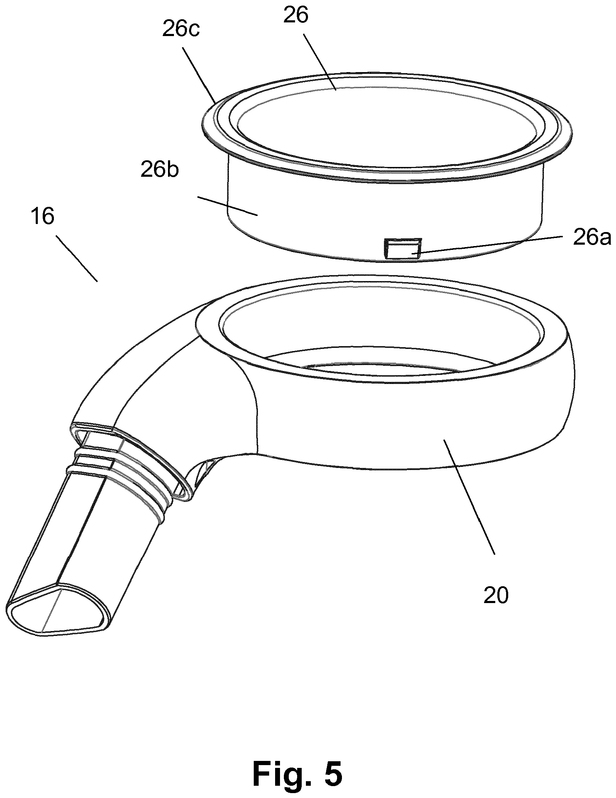

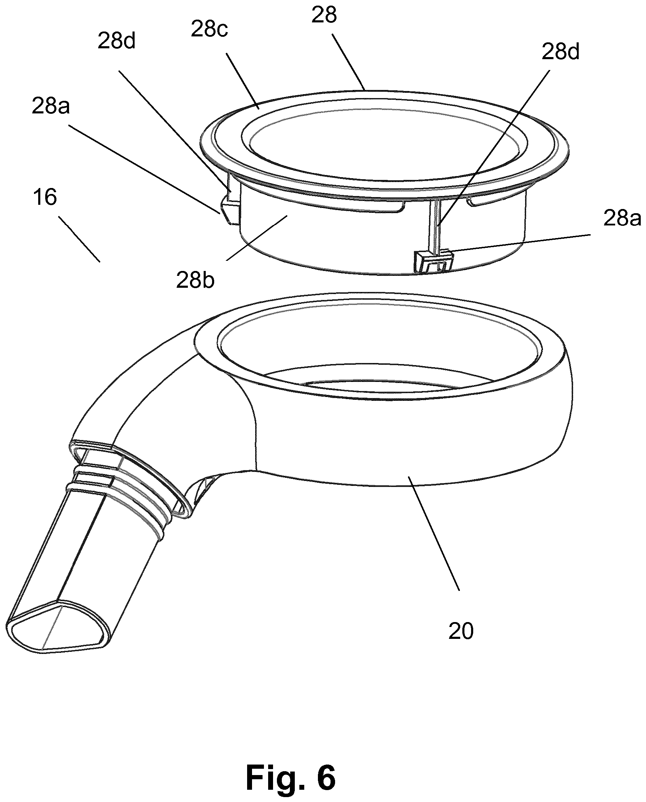

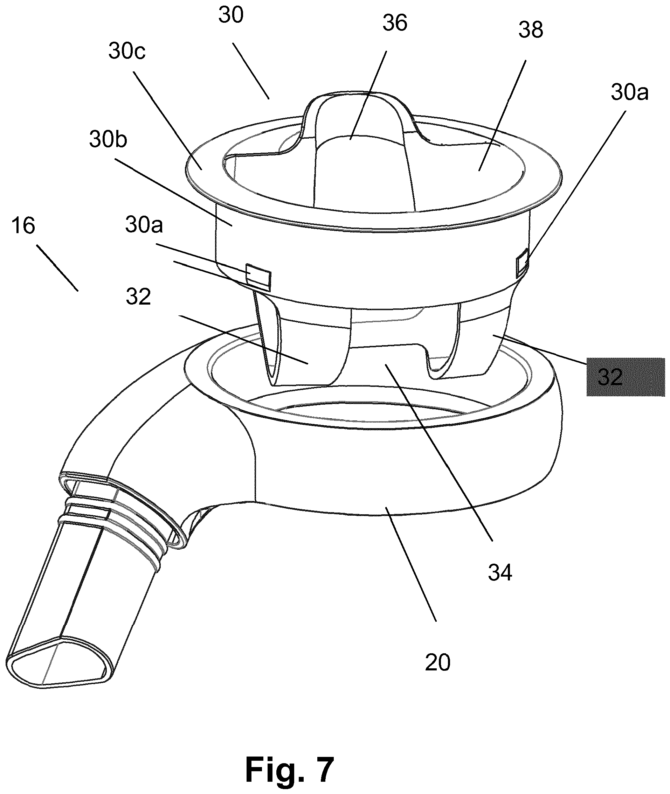

Wie dies weiter in **Fig. 5** gezeigt ist, ist die Objekthalterung 16 mit dem Halteelement 20 dazu eingerichtet, Einsatzelemente 26, 28 (vgl. **Fig. 6**) oder 30 (vgl. **Fig. 7****)** aufzunehmen. Die Einsatzelemente 26, 28 und 30 können im Halteelement 20 in die Haltenut 24 entsprechend eingesteckt und dort verrastet werden. Das Einsatzelement 26 ist dabei als ringförmiger Einsatz ausgebildet, der eine federnde Rastnase 26a, einen zylindrischen Grundkörper 26b und einen überstehenden Kragen 26c aufweist.

Die Rastnase 26a greift in die Haltenut 24 ein.

Der zylindrische Grundkörper 26b bildet eine ringförmige Außenkontur, die an eine Innenkontur, nämlich die ringförmige Innenkontur des Halteelements 20 angepasst ist. Der Kragen 26c bleibt auf dem oberen Rand des Halteelements 20 liegen. Das Einsatzelement 28 ist dabei im Wesentlichen vergleichbar dem Einsatzelement 26 aufgebaut. Auch hier sind eine Rastnase 28a, ein zylindrischer Grundkörper 28b und ein Kragen 28c vorgesehen. Gleichzeitig sind mehrere Rastnasen 28a vorgesehen, wobei an die Rastnasen 28a jeweils ein Steg 28d anschließt. Hierdurch wird eine verbesserte Verrastung und Klemmung im Halteelement 20 erreicht.

**Fig. 7** zeigt ein Einsatzelement 30 in Form einer Mobiltelefonhalterung und/oder Scannerhalterung. Dabei sind zwei Bodenstegelemente 32 vorgesehen und ein Zwischenraum 34, der sich mittig bodenseitig im Einsatzelement 30 befindet und zwischen den beiden Bodenstegelementen 32 angeordnet ist. Die Bodenstegelemente 32 sind bogenförmig ausgebildet und dienen zur Einlage bzw. zur Abstützung der Unterkante eines Mobiltelefons. Darüber hinaus weist das Einsatzelement 30 eine Wandschräge 38 auf, die an den tiefsten Punkt der Bodenstegelemente 32 derart angepasst ist, dass ein eingestelltes Mobiltelefon durch die Schräge 38 abgestützt im tiefsten Punkt der Bodenstegelemente 32 entsprechend eingestellt und sauber aufliegen kann. Des Weiteren ist im mittleren Bereich der Schräge 38 eine Ausnehmung 36 vorgesehen, die zur Erleichterung der Herausnahme eines Mobiltelefons dient. Durch diese Ausnehmung ist es auch möglich, hier einen Scannergriff eines Warenscanners durch die Ausnehmung 36 hindurch treten zu lassen und dadurch das Einsatzelement 30 vorteilhaft neben der Nutzung als Mobiltelefonhalterung auch als Scannerhalterung nutzen zu können. Das Einsatzelement 30 weist ebenfalls mehrere Verrastungselemente 30a auf, einen zylindrischen Grundkörper 30b sowie einen Kragen 30c.

Das Halteelement 20 und auch die Einsatzelemente 26, 28 und 30 sind aus Kunststoff ausgebildet. Insbesondere können das Halteelement 20 und die Einsatzelemente 26, 28 und 30 als Kunststoffspritzguss ausgebildet sein. Dabei ist aber auch denkbar, dass hier beispielsweise ein 2K-Kunststoffspritzgießverfahren zum Einsatz kommt.

So ist beispielsweise denkbar, dass die Einsatzelemente 26, 28, 30 in ihrem inneren Bereich bzw. dem den in das Einsatzelement 26, 28, 30 einzusteckenden Gegenstand bzw. zu haltenden Gegenstand eine andere Kunststoffausführung aufweisen, als im Außenbereich.

So kann beispielsweise das Einsatzelement 26, 28, 30 im Bereich des zylindrischen Grundkörpers 26b, 28b, 30b aus einem steifen, schlagzähen Kunststoff wie Polyamid oder Polyethylen oder dergleichen ausgebildet sein.

Weiter denkbar ist, dass beispielsweise zumindest die außenliegende Kragenoberfläche des Kragens 26c, 28c, 30c und/oder das Innere des Einsatzelements 26, 28, 30 aus einem elastischen Kunststoff mit beispielsweise rutschhemmenden Eigenschaften ausgebildet ist. Dies kann beispielsweise ein Kunststoff auf Silikonbasis sein.

Denkbar ist aber auch, dass das Halteelement 20 und das Einsatzelement 26, 28, 30 aus dem identischen Kunststoff bestehen. Dies ist jedoch nicht zwingend erforderlich. Denkbar ist auch, dass beispielsweise das Halteelement 20 aus einem schlagzähen, eher steiferen Material ausgebildet ist. Bei den Einsatzelementen 26, 28, 30 kann es sich beispielsweise um gummiartige Einsatzelemente 26, 28, 30 oder auch Einsatzelemente 26, 28, 30 auf Silikonbasis handeln.

Für das Lösen der Rastnasen bzw. Verrastungselemente 26a, 28a, 30a kann vorgesehen sein, dass die Rastnasen 26a, 28a, 30a beim Lösevorgang mit einem Werkzeug wie beispielsweise einem Schraubenzieher eingedrückt und dadurch aus der Rastposition gelöst werden. Hierdurch kann das Einsatzelement 26, 28, 30 aus dem bzw. von dem Haltelement 20 gelöst werden. Die Einsatzelemente 26, 28, 30 mit runden Innengeometrien können insbesondere für Becher verwendet werden. Je nach Bechergröße kann der Innendurchmesser des Einsatzelementes 26, 28, 30 angepasst werden.

Für einen Scanner kann eine an die Außenkontur des durch das Einsatzelement 26, 28, 30 zu haltenden Scanner angepasste Geometrie gewählt werden. Denkbar ist beispielsweise eine ovale oder eine rechteckige Geometrie.

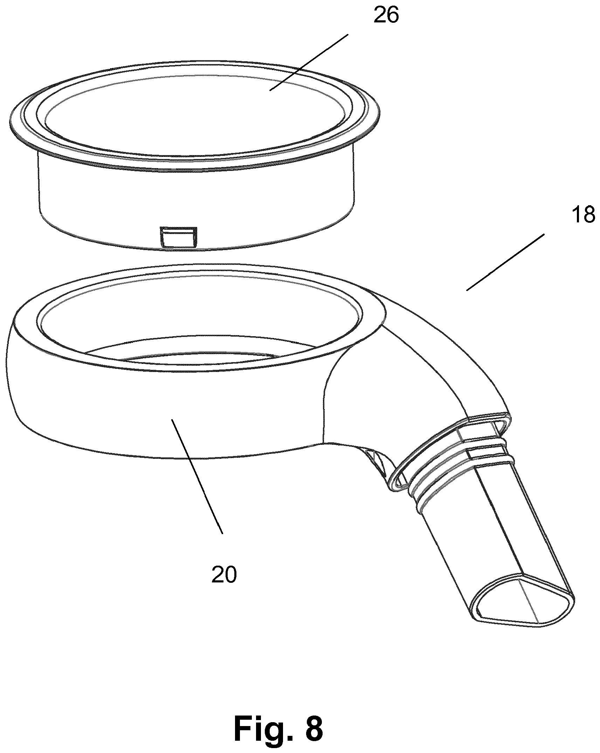

**Fig. 8** zeigt eine sog. rechte Objekthalterung 18 mit einem Halteelement 20 mit dem Einsatzelement 26 gemäß Fig. 5.

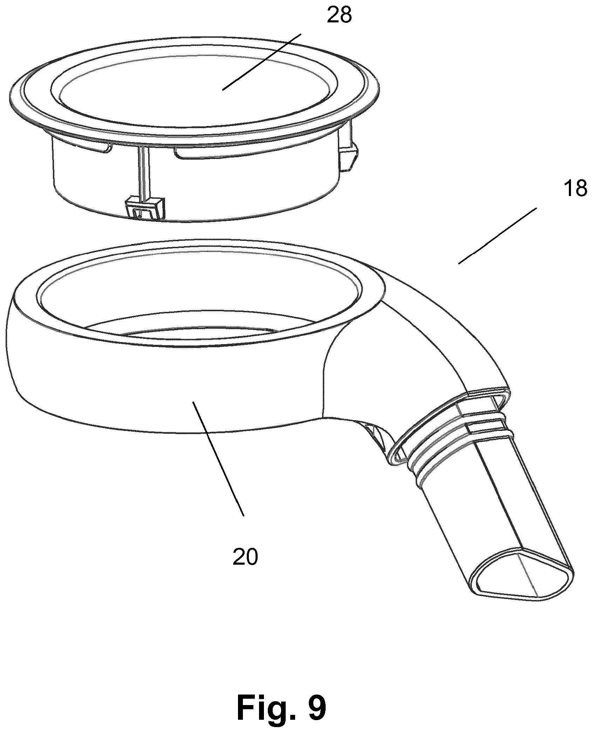

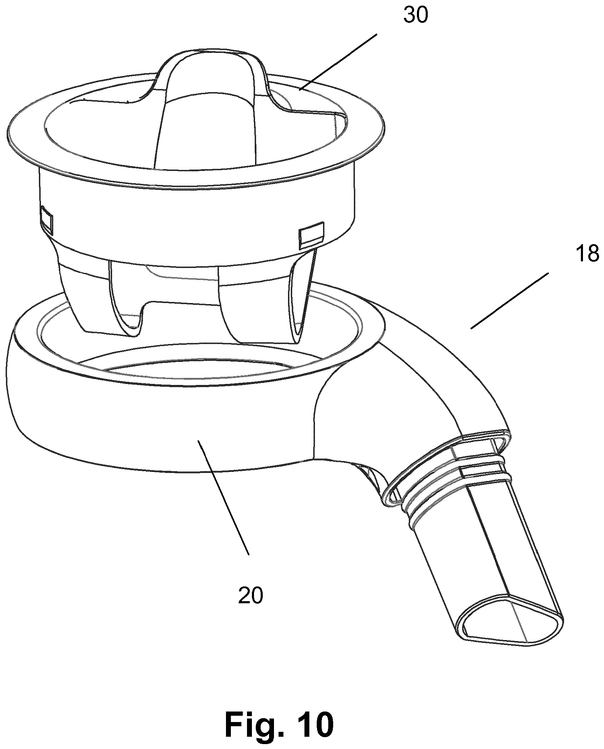

**Fig. 9** zeigt die rechte Objekthalterung 18 mit einem Halteelement 20 und mit dem Einsatzelement 28 gemäß Fig. 6 und **Fig. 10** zeigt die rechte Objekthalterung 18 mit einem Halteelement 20 und mit dem Einsatzelement 30 gemäß Fig. 7.

### Bezugszeichen

- 10: Transportwagen
- 12: Korb
- 14: Schiebegriffeinheit
- 16: linke Objekthalterung
- 18: rechte Objekthalterung
- 20: Halteelement
- 22: Befestigungsarm
- 22a: Befestigungsabschnitt
- 22b: Verbindungsabschnitt
- 22c: Rastnut
- 24: Haltenut
- 26: Einsatzelement
- 26a: Verrasterungselement, Rastnase
- 26b: zylindrischer Grundkörper
- 26c: Kragen
- 28: Einsatzelement
- 28a: Verrasterungselement, Rastnase
- 28b: zylindrischer Grundkörper
- 28c: Kragen
- 28d: Steg
- 30: Einsatzelement
- 30a: Verrastungselement, Rastnase
- 30b: zylindrischer Grundkörper
- 30c: Kragen
- 32: Bodenstegelemente
- 34: Zwischenraum
- 36: Ausnehmung
- 38: Wandschräge

## Patentansprüche

1. Objekthalterung (16, 18) für eine Schiebegriffeinheit (14) eines Transportwagens (10), wobei die Objekthalterung (16, 18) mehrteilig ausgebildet ist, wobei die Objekthalterung (16, 18) wenigstens ein Halteelement (20) und wenigstens ein Einsatzelement (26, 28, 30) aufweist, wobei das Einsatzelement (26, 28, 30) im montierten Zustand in das Halteelement (20) eingesetzt und dort gehalten ist,
wobei die Objekthalterung (16) einen Befestigungsarm (22) aufweist, wobei der Befestigungsarm (22) einen Befestigungsabschnitt (22a), einen Verbindungsabschnitt (22b) und eine Rastnut (22c) aufweist, wobei weiter mittels des Befestigungsabschnitts (22a) die Objekthalterung (16) in die Schiebegriffeinheit (14) in einen aufragenden Haltegriff einsteckbar und dort mittels der Rastnut (22c) verrastbar ist,
**dadurch gekennzeichnet, dass** das Einsatzelement (26, 28, 30) wenigstens ein Verrastungselement (26a, 28a, 30a) und/oder ein Klemmelement aufweist, mittels dessen das Einsatzelement (26, 28, 30) im Halteelement (20) verrastbar ist und/oder klemmbar im Halteelement (20) befestigt werden kann,
wobei das Verrastungselement (26a, 28a, 30a) und/oder das Klemmelement einteilig an das Einsatzelement (26, 28, 30) angeformt sind.

2. Objekthalterung (16, 18) nach Anspruch 1, **dadurch gekennzeichnet, dass** das Halteelement (20) im Wesentlichen ringförmig ausgebildet ist.

3. Objekthalterung (16, 18) nach Anspruch 1 oder Anspruch 2, **dadurch gekennzeichnet, dass** das Einsatzelement (26, 28, 30) wenigstens eine im Wesentlichen ringförmige Außenkontur aufweist, die an eine Innenkontur des Halteelements (20) angepasst ist.

4. Objekthalterung (16, 18) nach einem der vorhergehenden Ansprüche, **dadurch gekennzeichnet, dass** das Verrastungselement (26a, 28a, 30a) und/oder das Klemmelement ein Federelement mit wenigstens einer Rastnase ist und/oder umfasst.

5. Objekthalterung (16, 18) nach Anspruch 4, **dadurch gekennzeichnet, dass** das Halteelement (20) in einer Innenkontur, die für den Einsatz des Einsatzelements (26, 28, 30) vorgesehen ist, wenigstens eine Haltenut (24), insbesondere eine umlaufende Haltenut, aufweist.

6. Objekthalterung (16, 18) nach einem der vorhergehenden Ansprüche, **dadurch gekennzeichnet, dass** das Halteelement (20) und/oder das Einsatzelement (26, 28, 30) aus Kunststoff ausgebildet sind.

7. Objekthalterung (16, 18) nach Anspruch 6, **dadurch gekennzeichnet, dass** das Halteelement (20) und/oder das Einsatzelement (26, 28, 30) als Kunststoffspritzgussteile ausgebildet sind.

8. Objekthalterung (16, 18) nach Anspruch 6 oder Anspruch 7, **dadurch gekennzeichnet, dass** das Halteelement (20) und das Einsatzelement (26, 28, 30) zumindest teilweise aus dem identischen Kunststoff ausgebildet sind.

9. Objekthalterung (16, 18) nach einem der Ansprüche 6 bis 8, **dadurch gekennzeichnet, dass** das Halteelement (20) und/oder das Einsatzelement (26, 28, 30) zumindest teilweise aus einem weiteren Kunststoff ausgebildet sind.

10. Objekthalterung (16, 18) nach einem der vorhergehenden Ansprüche, **dadurch gekennzeichnet, dass** das Einsatzelement (26, 28) als ringförmiger Becherhalter ausgebildet ist.

11. Objekthalterung (16, 18) nach einem der vorhergehenden Ansprüche, **dadurch gekennzeichnet, dass** das Einsatzelement (30) wenigstens ein Bodenstegelement (32) aufweist, so dass das Einsatzelement (30) eingerichtet und beschaffen ist, als Mobiltelefonhalterung zu dienen.

12. Objekthalterung (16, 18) nach einem der vorhergehenden Ansprüche, **dadurch gekennzeichnet, dass** das Einsatzelement (26, 28) eine Lupe aufweist.

13. Objekthalterung (16, 18) nach einem der vorhergehenden Ansprüche, **dadurch gekennzeichnet, dass** mehrere Einsatzelemente (26, 28, 30) mit unterschiedlichen Innenradien und/oder Innenkonturen vorgesehen sind.

14. Schiebegriffeinheit (14) für einen Transportwagen (10) mit wenigstens einer Objekthalterung (16, 18) nach einem der Ansprüche 1 bis 13.

15. Transportwagen (10) mit wenigstens einer Schiebegriffeinheit (14) nach Anspruch 14.

## Claims

1. Object holder (16, 18) for a push handle unit (14) of a transport trolley (10), wherein the object holder (16, 18) is configured in multiple parts, wherein the object holder (16, 18) has at least one holding element (20) and at least one insert element (26, 28, 30), wherein the insert element (26, 28, 30) in the assembled state is inserted into the holding element (20) and held therein, wherein the object holder (16) has a fastening arm (22), wherein the fastening arm (22) has a fastening portion (22a), a connecting portion (22b) and a latching groove (22c), wherein furthermore the object holder (16) by means of the fastening portion (22a) is insertable into an upwardly protruding grip in the push handle unit (14) and by means of the latching groove (22c) able to be latched in said upwardly protruding grip,
**characterized in that**
the insert element (26, 28, 30) has at least one latching element (26a, 28a, 30a) and/or one clamping element by means of which the insert element (26, 28, 30) is able to be latched in the holding element (20) and/or able to be fastened in a clampable manner in the holding element (20), wherein the latching element (26a, 28a, 30a) and/or the clamping element are integrally moulded on the insert element (26, 28, 30) .

2. Object holder (16, 18) according to Claim 1, **characterized in that** the holding element (20) is configured to be substantially annular.

3. Object holder (16, 18) according to Claim 1 or Claim 2, **characterized in that** the insert element (26, 28, 30) has at least one substantially annular external contour which is adapted to an internal contour of the holding element (20).

4. Object holder (16, 18) according to one of the preceding claims, **characterized in that** the latching element (26a, 28a, 30a) and/or the clamping element are/is or comprise/comprises a spring element having at least one latching cam.

5. Object holder (16, 18) according to Claim 4, **characterized in that** the holding element (20), in an internal contour which is provided for the insertion of the insert element (26, 28, 30), has at least one holding groove (24), in particular an encircling holding groove.

6. Object holder (16, 18) according to one of the preceding claims, **characterized in that** the holding element (20) and/or the insert element (26, 28, 30) are/is configured from plastics material.

7. Object holder (16, 18) according to Claim 6, **characterized in that** the holding element (20) and/or the insert element (26, 28, 30) are/is configured as plastics-material injection-moulded part(s).

8. Object holder (16, 18) according to Claim 6 or Claim 7, **characterized in that** the holding element (20) and the insert element (26, 28, 30) are at least in part configured from the identical plastics material.

9. Object holder (16, 18) according to one of Claims 6 to 8, **characterized in that** the holding element (20) and/or the insert element (26, 28, 30) are at least in part configured from an additional plastics material.

10. Object holder (16, 18) according to one of the preceding claims, **characterized in that** the insert element (26, 28) is configured as an annular cup holder.

11. Object holder (16, 18) according to one of the preceding claims, **characterized in that** the insert element (30) has at least one base web element (32), such that the insert element (30) is specified and conceived to serve as a mobile phone holder.

12. Object holder (16, 18) according to one of the preceding claims, **characterized in that** the insert element (26, 28) has a magnifying glass.

13. Object holder (16, 18) according to one of the preceding claims, **characterized in that** a plurality of insert elements (26, 28, 30) having different internal radii and/or internal contours are provided.

14. Push handle unit (14) for a transport trolley (10), having at least one object holder (16, 18) according to one of Claims 1 to 13.

15. Transport trolley (10) having at least one push handle unit (14) according to Claim 14.

## Revendications

1. Support d'objet (16, 18) destiné à une unité formant poignée de poussée (14) d'un chariot de transport (10), le support d'objet (16, 18) étant conçu en plusieurs parties, le support d'objet (16, 18) comportant au moins un élément de retenue (20) et au moins un élément d'insertion (26, 28, 30), l'élément d'insertion (26, 28, 30) étant inséré dans l'élément de retenue (20) à l'état assemblé et étant maintenu dans celui-ci, le support d'objet (16) comportant un bras de fixation (22), le bras de fixation (22) comportant une portion de fixation (22a), une portion de liaison (22b) et une rainure d'encliquetage (22c), le support d'objet (16) pouvant en outre être inséré, au moyen de la portion de fixation (22a), dans l'unité formant poignée de poussée (14) dans une poignée en saillie et pouvant être encliqueté à celle-ci au moyen de la rainure d'encliquetage (22c),
**caractérisé en ce que**
l'élément d'insertion (26, 28, 30) comporte au moins un élément d'encliquetage (26a, 28a, 30a) et/ou un élément de serrage au moyen desquels l'élément d'insertion (26, 28, 30) peut être encliqueté dans l'élément de retenue (20) et/ou peut être serré dans l'élément de retenue (20),
l'élément d'encliquetage (26a, 28a, 30a) et/ou l'élément de serrage étant conçus d'une seule pièce sur l'élément d'insertion (26, 28, 30).

2. Support d'objet (16, 18) selon la revendication 1, **caractérisé en ce que** l'élément de retenue (20) est sensiblement annulaire.

3. Support d'objet (16, 18) selon la revendication 1 ou la revendication 2, **caractérisé en ce que** l'élément d'insertion (26, 28, 30) présente au moins un contour extérieur sensiblement annulaire qui est adapté à un contour intérieur de l'élément de retenue (20).

4. Support d'objet (16, 18) selon l'une des revendications précédentes, **caractérisé en ce que** l'élément d'encliquetage (26a, 28a, 30a) et/ou l'élément de serrage est et/ou comprend un élément à ressort pourvu d'au moins un ergot d'encliquetage.

5. Support d'objet (16, 18) selon la revendication 4, **caractérisé en ce que** l'élément de retenue (20) comporte au moins une rainure de retenue (24), notamment une rainure de retenue circonférentielle, dans un contour intérieur qui est destiné à l'insertion de l'élément d'insertion (26, 28, 30).

6. Support d'objet (16, 18) selon l'une des revendications précédentes, **caractérisé en ce que** l'élément de retenue (20) et/ou l'élément d'insertion (26, 28, 30) sont en matière synthétique.

7. Support d'objet (16, 18) selon la revendication 6, **caractérisé en ce que** l'élément de retenue (20) et/ou l'élément d'insertion (26, 28, 30) sont conçus comme des pièces moulées par injection de matière synthétique.

8. Support d'objet (16, 18) selon la revendication 6 ou la revendication 7, **caractérisé en ce que** l'élément de retenue (20) et l'élément d'insertion (26, 28, 30) sont au moins partiellement formés à partir d'une même matière synthétique.

9. Support d'objet (16, 18) selon l'une des revendications 6 à 8, **caractérisé en ce que** l'élément de retenue (20) et/ou l'élément d'insertion (26, 28, 30) sont formés au moins partiellement à partir d'une autre matière synthétique.

10. Support d'objet (16, 18) selon l'une des revendications précédentes, **caractérisé en ce que** l'élément d'insertion (26, 28) est conçu comme un porte-gobelet annulaire.

11. Support d'objet (16, 18) selon l'une des revendications précédentes, **caractérisé en ce que** l'élément d'insertion (30) comporte au moins un élément formant nervure de fond (32) de sorte que l'élément d'insertion (30) est conçu et réalisé pour servir de support de téléphone portable.

12. Support d'objet (16, 18) selon l'une des revendications précédentes, **caractérisé en ce que** l'élément d'insertion (26, 28) comporte une loupe.

13. Support d'objet (16, 18) selon l'une des revendications précédentes, **caractérisé en ce qu'**une pluralité d'éléments d'insertion (26, 28, 30) sont prévus avec des rayons intérieurs et/ou contours intérieurs différents.

14. Unité formant poignée de poussée (14) destinée à un chariot de transport (10) comprenant au moins un support d'objet (16, 18) selon l'une des revendications 1 à 13.

15. Chariot de transport (10) comprenant au moins une unité formant poignée de poussée (14) selon la revendication 14.
